# FASCICULE DE BREVET EUROPEEN

(11) **EP 3 158 388 B1**
(45) Date de publication et mention de la délivrance du brevet: **29.01.2020**
(21) Numéro de dépôt: 15738740.8
(22) Date de dépôt: 23.06.2015
(51) Int. Cl.: G02C 13/00, B24B 13/005, B24B 49/12, G01M 11/02

(54) **APPAREIL CENTREUR-BLOQUEUR POUR LENTILLE OPHTALMIQUE**
ZENTRIERBLOCKIERVORRICHTUNG FÜR OPHTHALMISCHE LINSE
OPHTHALMIC LENS CENTRING-BLOCKING APPARATUS

(30) Priorité: 23.06.2014 FR 1455813
(43) Date de publication de la demande: 26.04.2017
(73) Titulaire: Essilor International, 94220 Charenton-le-Pont (FR)
(72) Inventeur: TANG, David C., F-94227 Charenton-le-Pont Cedex (FR); ESCALIER, Guilhem, F-94227 Charenton-le-Pont Cedex (FR); BOUTINON, Stéphane, F-94227 Charenton-le-Pont Cedex (FR); NAUCHE, Michel, F-94227 Charenton-le-Pont Cedex (FR); HARTMANN, Léonard, F-94227 Charenton-le-Pont Cedex (FR)
(74) Mandataire: Jacobacci Coralis Harle
(86) Numéro de dépôt international: PCT/FR2015/051673
(87) Numéro de publication internationale: WO 2015/197970

(56) Documents cités:
- EP-A1- 0 409 760
- EP-A1- 0 866 355
- EP-A2- 0 363 281
- EP-A2- 0 876 874
- DE-C- 369 538
- GB-A- 1 164 732
- US-A- 3 134 208
- US-A- 3 333 369

## Description

### DOMAINE TECHNIQUE AUQUEL SE RAPPORTE L'INVENTION

La présente invention concerne de manière générale le domaine de la lunetterie.

Elle concerne plus particulièrement un appareil centreur-bloqueur comportant :
- un châssis,
- un support monté sur le châssis, qui est adapté à recevoir une lentille ophtalmique,
- des moyens de blocage montés sur le châssis, qui sont adaptés à recevoir un accessoire de blocage agencé pour se fixer à la lentille ophtalmique, et
- des moyens de centrage montés sur le châssis, qui comportent un objectif de visée de la lentille ophtalmique et qui permettent de visualiser un référentiel de la lentille ophtalmique.

### ARRIERE-PLAN TECHNOLOGIQUE

La partie technique du métier de l'opticien, qui consiste à monter une paire de lentilles ophtalmiques sur une monture de lunettes sélectionnée par un client, se décompose en quatre opérations principales :
- l'acquisition des formes des contours des entourages de la monture de lunettes sélectionnée par le client,
- le centrage de chaque lentille ophtalmique, qui consiste à déterminer le référentiel de la lentille à l'aide de marques de centrage prévues sur celles-ci, puis à positionner convenablement le contour de l'entourage précédemment acquis dans le référentiel de la lentille de manière qu'une fois détourée suivant ce contour puis montée dans sa monture, la lentille soit correctement positionnée par rapport à l'œil correspondant du client afin qu'elle exerce au mieux la fonction optique pour laquelle elle a été conçue,
- le blocage de chaque lentille, qui consiste à fixer un accessoire de blocage sur la lentille, de manière que la lentille puisse être facilement extraite du poste de centrage et puisse être engagée dans le poste de détourage sans perte de référentiel, puis
- le détourage de chaque lentille qui consiste à usiner cette lentille suivant le contour préalablement centré.

Ici, on s'intéresse plus particulièrement aux opérations de centrage et de blocage.

Ces opérations sont généralement réalisées par un opticien, à l'aide d'un appareil centreur-bloqueur.

Ces appareils se présentent généralement de la même manière, avec des moyens de support de la lentille ophtalmique, des moyens optiques pour le centrage de la lentille ophtalmique, et des moyens de blocage pour déposer l'accessoire de blocage sur la lentille.

Un premier exemple d'appareil centreur-bloqueur est commercialisé par la demanderesse sous la référence Delta. Dans cet appareil, le support est prévu pour recevoir la lentille avec sa face avant convexe orientée vers le haut. Les moyens optiques de centrage comportent un oeilleton au travers duquel l'opticien peut observer la lentille superposée à une mire de centrage, ce qui lui permet de déplacer la lentille par rapport à cette mire de manière à la centrer correctement. Les moyens de blocage comportent quant à eux un bras qui est monté mobile de manière à pouvoir suivre une trajectoire de rotation puis de translation, et qui est manœuvrable manuellement de manière que l'opticien puisse forcer le bras à déposer l'accessoire de blocage sur la lentille.

Un second exemple d'appareil centreur-bloqueur est commercialisé par la demanderesse sous la référence Iness. Dans cet appareil, le support est également prévu pour recevoir la lentille avec sa face avant convexe orientée vers le haut. Les moyens optiques de centrage comportent une caméra adaptée à acquérir le référentiel de la lentille. Les moyens de blocage comportent quant à eux un bras mobile automatisé, qui permet de déposer l'accessoire de blocage en une position souhaitée sur la lentille.

Un troisième exemple d'appareil centreur-bloqueur est commercialisé par la société National Optronics sous la référence 3B-Blocker. Dans cet appareil, le support est cette fois prévu pour recevoir la lentille avec sa face avant convexe orientée vers le bas. Les moyens optiques de centrage comportent un système de projection situé au-dessus du support. Les moyens de blocage comportent quant à eux un bras situé sous le support, et qui est prévu pour s'escamoter du champ du système de projection pendant l'opération de centrage, puis pour venir presser l'accessoire de blocage par le dessous de la lentille pendant l'opération de blocage.

Les demandes de brevet EP 0 409 760 A1 et EP 0 876 874 A2 décrivent des appareils centreur-bloqueur connus.

L'inconvénient majeur commun à tous ces appareils centreur-bloqueur est qu'ils présentent tous une architecture complexe, particulièrement pour le blocage de la lentille, si bien que leur encombrement et leur coût s'avèrent élevés.

### OBJET DE L'INVENTION

Afin de remédier aux inconvénients précités de l'état de la technique, la présente invention propose un appareil utilisant une nouveau procédé pour déposer l'accessoire de blocage sur la lentille ophtalmique.

Plus particulièrement, on propose selon l'invention un appareil centreur-bloqueur tel que défini dans l'introduction, dans lequel les moyens de blocage et le support sont montés mobiles l'un par rapport à l'autre, entre une position de centrage (dans laquelle la lentille ophtalmique est située à distance de l'accessoire de blocage), et une position de blocage (dans laquelle la lentille ophtalmique vient s'appuyer contre l'accessoire de blocage) et dans lequel les moyens de blocage sont situés de telle sorte que l'accessoire de blocage reste dans le champ image dudit objectif de visée quelle que soit la position relative des moyens de blocage par rapport au support.

L'accessoire de blocage est situé à l'opposé de la lentille ophtalmique par rapport à l'objectif de visée. Il ne gêne donc pas la vue de la lentille ophtalmique par l'objectif de visée. Il peut donc être laissé dans le champ de l'objectif de visée pendant l'opération de centrage. Par conséquent, les moyens de blocage peuvent présenter une architecture simplifiée, puisqu'ils n'auront pas à être escamotés du champ de l'objectif de visée pendant l'opération de centrage. Ils devront simplement permettre le dépôt de l'accessoire de blocage sur la lentille ophtalmique pendant l'opération de blocage.

Grâce à l'invention, l'appareil centreur-bloqueur peut donc présenter une architecture simplifiée, au bénéfice de son encombrement et de son coût.

Préférentiellement, les moyens de blocage sont montés fixes sur le châssis et le support est monté mobile sur le châssis.

Ainsi, il n'est pas prévu de bras monté mobile sur le châssis pour déposer l'accessoire de blocage sur la lentille, puisque c'est la mobilité du support qui permet de déplacer la lentille contre l'accessoire de blocage.

Une mobilité simple de ce support lui permet d'assurer cette fonction avec précision. Il peut s'agir d'une mobilité de pivotement ou, préférentiellement, d'une mobilité de translation.

D'autres caractéristiques avantageuses et non limitatives de l'appareil centreur-bloqueur conforme à l'invention sont les suivantes :
- ledit support est monté mobile en translation sur le châssis, suivant un axe de déplacement ;
- ledit support délimitant un plan d'appui pour la lentille ophtalmique, les moyens de centrage permettant d'observer la lentille ophtalmique portée par le support selon un axe de visualisation transversal audit plan d'appui, ledit axe de déplacement est parallèle audit axe de visualisation ;
- il est prévu un élément élastique qui est adapté à rappeler automatiquement le support en position de centrage, et dont la raideur est telle qu'il est possible de repousser manuellement le support en position de blocage ;
- il est prévu des moyens de pilotage électronique d'un mécanisme de manœuvre du support, qui sont adaptés à commander automatiquement le déplacement du support entre sa position de centrage et sa position de blocage ;
- le support est mobile sur le châssis jusqu'à une troisième position de chargement, qui est située à l'opposé de la position de centrage par rapport à la position de blocage ;
- ledit support délimitant un plan d'appui pour la lentille ophtalmique, ledit support et lesdits moyens de blocage sont situés d'un même côté du plan d'appui ;
- le support comporte un tube cylindrique qui présente un bord d'extrémité libre adapté à recevoir ladite lentille ophtalmique ;
- le support comporte une zone d'appui pour la lentille ophtalmique, qui est réalisée dans un matériau antidérapant et anti-rayure permettant, d'une part, de déplacer manuellement la lentille ophtalmique sur le support, et, d'autre part, de maintenir fixement la lentille ophtalmique sur le support lorsque le support se déplace depuis sa position de centrage jusqu'à sa position de blocage ;
- une majeure partie du support est réalisée dans une matière transparente;
- le support délimitant un plan d'appui pour la lentille ophtalmique, les moyens de centrage comportent un objectif qui est situé d'un premier côté du plan d'appui, et des premiers moyens d'éclairage qui sont situés de l'autre côté du plan d'appui ;
- il est prévu des premiers moyens d'éclairage qui sont répartis tout autour du support, de manière à générer une lumière rasante sur l'une des faces et/ou sur la tranche de la lentille ophtalmique ;
- les premiers moyens d'éclairage comportent au moins une source de lumière dans le domaine visible ;
- les premiers moyens d'éclairage comportent au moins une source de lumière dans le domaine infrarouge ;
- le support délimitant un plan d'appui pour la lentille ophtalmique, les moyens de centrage comportent, d'un premier côté du plan d'appui, un objectif et des seconds moyens d'éclairage de la lentille ophtalmique ;
- les moyens de centrage comportent une caméra connectée à un écran visible par l'usager ;
- les moyens de centrage comportent un oeilleton de visée ; et
- il est prévu un accessoire rétrodiffuseur rétractable, adapté à se placer entre le support et la lentille ophtalmique.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un appareil centreur-bloqueur selon l'invention ;
- la figure 2 est une vue en perspective de l'appareil centreur-bloqueur de la figure 1 ; et
- la figure 3 est une vue en coupe du support et des moyens de blocage de l'appareil centreur-bloqueur de la figure 1.

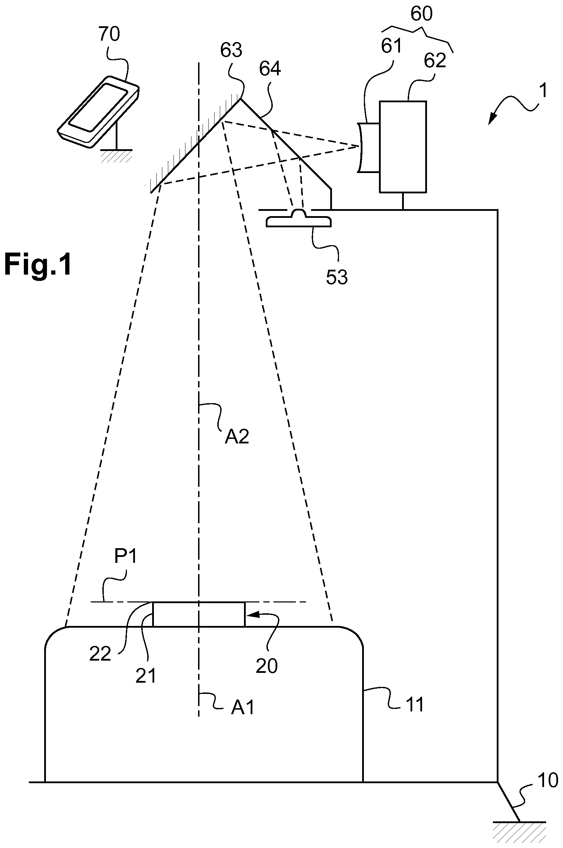

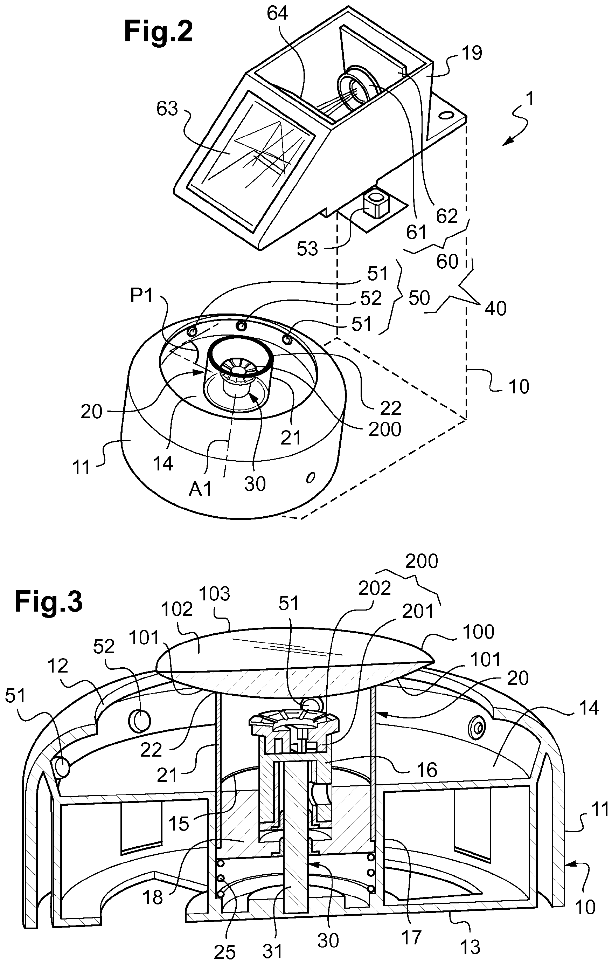

Sur les figures 1 et 2, on a représenté un appareil centreur-bloqueur 1.

Un tel appareil est utilisé par un opticien pour préparer le détourage d'une lentille ophtalmique suivant un contour donné, en vue de monter cette lentille ophtalmique sur une monture de lunettes sélectionnée par un client.

Cet appareil est généralement utilisé après que l'opticien a acquis la forme du contour selon lequel la lentille doit être détourée. Cet appareil est alors employé pour opérer des opérations de centrage et de blocage de la lentille ophtalmique.

L'objectif de l'opération de centrage est de repérer le référentiel de la lentille ophtalmique, et de déterminer la position que doit occuper le contour précité dans ce référentiel afin que la lentille, une fois détourée suivant ce contour puis montée sur la monture de lunettes, se retrouve convenablement centrée en regard de l'œil correspondant du client (afin d'exercer au mieux la fonction optique pour laquelle elle a été conçue).

L'objectif de l'opération de blocage est de déposer un accessoire (appelé « accessoire de blocage ») sur la lentille ophtalmique qui puisse permettre, d'une part, de faciliter la saisie de la lentille afin de la transporter depuis l'appareil centreur-bloqueur 1 jusqu'à un appareil de détourage, et, d'autre part, de fournir un repère stable permettant d'indiquer la position du référentiel de la lentille à l'issue de son transport.

Comme le montre la vue en coupe de la figure 3, la lentille ophtalmique 100 à détourer présente deux faces optiques (dont une face avant 101 convexe et une face arrière 102 concave) et une tranche 103. Les formes des faces avant 101 et arrière 102 de cette lentille ophtalmique 100 sont conçues de telle sorte que la lentille présente des caractéristiques optiques permettant de corriger les troubles de vision du client.

La lentille ophtalmique 100 est en outre pourvue de marquages (non visibles sur les figures) permettant de repérer son référentiel, appelé « référentiel optique ».

Ces marquages peuvent se présenter sous la forme de marquages provisoires imprimés à l'encre et/ou de marquages permanents gravés dans la lentille (on parle de microgravures).

Les marquages provisoires permettent généralement un repérage commode du référentiel optique de la lentille préalablement à son montage sur la monture de lunettes tandis que les marquages permanents permettent d'identifier la nature et les caractéristiques de la lentille ophtalmique, ainsi que de vérifier ou de rétablir, après effacement des marquages provisoires, le repérage exact de ladite lentille.

Ici, on s'intéressera donc plus particulièrement aux marquages provisoires pour déterminer la position et l'orientation de la lentille.

Parmi ces marquages provisoires, on s'intéressera plus précisément ici :
- à un point de centrage optique qui correspond conventionnellement, pour une lentille à puissance sphérique, au point où les rayons lumineux ne sont pas déviés par la lentille, ou, pour une lentille progressive, au point de «référence prisme » où est mesurée la puissance prismatique nominale de la lentille ophtalmique 10 correspondant à la prescription du porteur, et
- aux traits d'horizon repérant l'horizontale de la lentille ophtalmique 100.

L'objectif de l'appareil centreur-bloqueur 1 est alors :
- de permettre de repérer la position du référentiel optique de la lentille ophtalmique 100 (ce qui revient ici à repérer les positions du point de centrage optique et des traits d'horizon marqués sur la lentille), et
- de placer l'accessoire de blocage sur la lentille ophtalmique 100, dans une position connue dans ce référentiel optique (ce qui consiste ici à placer l'accessoire de blocage dans l'axe du point de centrage optique, avec ses repères d'horizon dans l'axe des traits d'horizon de la lentille).

Comme le montrent les figures 1 et 2, l'appareil centreur-bloqueur 1 comporte à cet effet au moins :
- un châssis 10,
- un support 20 monté sur le châssis 10 et adapté à recevoir la lentille ophtalmique 100,
- des moyens de blocage 30 montés sur le châssis 10 et adaptés à recevoir l'accessoire de blocage 200, et
- des moyens de centrage 40 montés sur le châssis 10, qui comportent un objectif de visée et qui permettent de visualiser le référentiel optique de la lentille ophtalmique 100.

Comme cela sera bien exposé dans la suite, l'objectif de visée pour être formé par l'objectif d'un appareil photo ou d'une caméra, ou encore par un œilleton de visée.

Préférentiellement, les moyens de centrage 40 sont montés fixement sur le châssis 10.

Selon une caractéristique particulièrement avantageuse de l'invention, les moyens de blocage 30 et le support 20 sont montés mobiles l'un par rapport à l'autre et les moyens de blocage 30 sont situés de telle sorte que l'accessoire de blocage 200 reste dans le champ image dudit objectif de visée 61 quelle que soit la position relative des moyens de blocage 30 par rapport au support 20.

Préférentiellement, les moyens de blocage 30 sont montés fixement sur le châssis 10, et c'est le support 20 qui est monté mobile sur le châssis 10.

Ainsi, après avoir été placé sur les moyens de blocage 30, l'accessoire de blocage 200 est prévu pour rester immobile aussi bien pendant l'opération de centrage que pendant l'opération de blocage de la lentille ophtalmique 100. C'est en revanche la lentille ophtalmique 100 qui va se déplacer pour venir au contact de l'accessoire de blocage 200 au cours de l'opération de blocage.

Le support 20 de la lentille ophtalmique 100 est alors plus précisément monté mobile entre :
- une position de centrage dans laquelle la lentille ophtalmique 100 est située à distance de l'accessoire de blocage 200, et
- une position de blocage dans laquelle la lentille ophtalmique 100 vient s'appuyer contre l'accessoire de blocage 200.

Avantageusement, le support 20 peut également prendre une position supplémentaire dite de chargement (située à l'opposé de la position de centrage par rapport à la position de blocage), qui permet de faciliter le chargement de l'accessoire de blocage 200 sur les moyens de blocage 30. Il peut ainsi coulisser sur une course d'environ 1 centimètre.

En pratique, le support 20 est monté coulissant sur le châssis 10, suivant un axe de déplacement A1, ici vertical. Sa position de centrage est donc une position haute(stable et/ou verrouillable), sa position de chargement une position basse (stable et/ou verrouillable), et sa position de blocage est une position intermédiaire.

Avantageusement, les moyens de centrage 40 sont prévus pour observer la lentille ophtalmique 100 selon un axe de visualisation A2 qui est parallèle (ici confondu) à l'axe de déplacement A1. De cette manière, la position (bidimensionnelle) de la lentille vue par les moyens de centrage 40 ne change pas lorsque le support 20 descend la lentille ophtalmique 100 depuis sa position de centrage jusqu'à sa position de blocage.

Le support 20 présente une extrémité haute par laquelle il porte la lentille ophtalmique 100 et qui délimite ainsi un plan d'appui P1 pour la lentille ophtalmique 100.

Dans le mode de réalisation représenté sur les figures, le support 20 et les moyens de blocage 30 sont situés d'un même côté du plan d'appui P1 (en pratique sous ce plan d'appui), tandis que l'objectif permettant de visualiser la lentille ophtalmique est placé du côté opposé de ce plan d'appui P1 (au-dessus de celui-ci).

Comme le montrent les figures 1 à 3, dans le mode de réalisation représenté, le châssis 10 comporte un dôme 11, ici moulé en matière plastique.

Comme le montre la figure 3, ce dôme 11 présente une paroi latérale qui est ouverte en face supérieure par une large ouverture circulaire 12 centrée sur l'axe de déplacement A1. Il comporte également un fond 13 qui s'étend dans un plan horizontal et qui ferme à l'arrière la paroi latérale. Il comporte enfin, à mi-hauteur, un faux-fond 14.

Ce faux-fond 14 est visible au travers de la large ouverture circulaire 12. Il présente en son centre un trou circulaire 15 centrée sur l'axe de déplacement A1. Ce trou circulaire 15 est bordé à l'arrière par un conduit 17 qui s'étend entre le fond 13 et le faux-fond 14.

Comme le montre la figure 3, les moyens de blocage 30 (conçus pour supporter l'accessoire de blocage 200) comportent un arbre vertical 31, centré sur l'axe de déplacement A1 et logé à l'intérieur de ce conduit 17.

Cet arbre vertical 31 présente une extrémité inférieure fixée (ici en force) dans un trou borgne prévu en creux dans la face supérieure du fond 13 du dôme 11. Il présente par ailleurs une extrémité supérieure libre qui porte une douille 16 d'accueil de l'accessoire de blocage 200.

Cette douille 16 présente une forme tubulaire. Elle est rigidement fixée à l'arbre vertical 31. Elle présente un logement ménagé en creux dans sa face supérieure. Ce logement présente des reliefs qui sont prévus de telle manière que la douille 16 ne peut accueillir l'accessoire de blocage 200 qu'avec une orientation déterminée.

Ces reliefs comportent ici, en saillie du fond du logement ménagé dans la douille 16, un ergot centré sur l'axe de déplacement A, et une nervure radiale (non représentés).

L'accessoire de blocage 200 se présente quant à lui sous la forme d'une sorte de champignon, avec un pied (dite « partie d'assujettissement 201 ») qui est prévu pour se placer dans la douille 16, et un chapeau (site « partie de fixation 202 ») qui est prévu pour se fixer à la lentille ophtalmique 100.

Sa partie d'assujettissement 201 présente une forme cylindrique de révolution, de diamètre et de hauteur égaux au diamètre et à la profondeur du logement délimité par la douille 16. Elle présente en outre, du côté de sa face inférieure, des reliefs qui permettent de facilement repérer l'orientation de l'accessoire de blocage 200 et qui sont conçus pour coopérer avec les reliefs prévus au fond du logement délimité par la douille 16. Il s'agit ici d'un trou central et d'une rainure radiale. De cette manière, l'accessoire de blocage 200 peut être précisément maintenu par la douille 16, dans une position et avec une orientation connues.

La partie de fixation 202 de l'accessoire de blocage 200 se présente quant à elle sous la forme d'un disque incurvé, qui est adapté à être fixé à la lentille ophtalmique 100 par sa face supérieure, par exemple au moyen d'un adhésif double-faces.

Dans l'appareil centreur-bloqueur 1, comme le montre bien la figure 2, le support 20 comporte un tube cylindrique 21 qui présente un bord d'extrémité supérieur par lequel il est adapté à recevoir la lentille ophtalmique 100.

Ce tube cylindrique 21 est positionné suivant l'axe de déplacement A1, de telle manière qu'il entoure l'arbre vertical 31 et qu'il s'étend à distance de l'accessoire de blocage 200.

Il présente une forme de révolution autour de l'axe de déplacement A1, avec un diamètre de l'ordre de 4 centimètres. Il présente des bords d'extrémité supérieur et inférieur droits, qui s'étendent dans des plans orthogonaux à l'axe de déplacement A1.

Le plan d'appui P1, au niveau duquel le support 20 accueille la lentille ophtalmique 100, est donc défini comme étant le plan dans lequel s'étend le bord d'extrémité supérieur du tube cylindrique 21.

En variante, le bord d'extrémité supérieur du tube cylindrique pourrait présenter trois ergots en saillie formant un trépieds accueillant la lentille ophtalmique (auquel cas le plan d'appui P1 serait défini comme le plan passant par les extrémités supérieures de ces trois ergots).

Préférentiellement, une majeure partie du support 20 est réalisée dans une matière transparente, de manière que l'ensemble de la lentille peut être correctement éclairé par le dessous, au travers du support 20. Ici, le tube cylindrique 21 est réalisé d'une seule pièce en matière plastique transparente.

Ce tube cylindrique 21 présente toutefois, au niveau de son bord d'extrémité supérieur, un revêtement 22 en matériau antidérapant et anti-rayure (par exemple en caoutchouc).

Ce revêtement 22 présente un coefficient d'adhérence suffisamment élevé pour assurer le maintien de la lentille ophtalmique 100 en position fixe sur le support 20 lorsque le support 20 se déplace depuis sa position de centrage jusqu'à sa position de blocage.

Ce revêtement 22 présente toutefois un coefficient d'adhérence pas trop élevé pour permettre à l'opticien de pouvoir faire glisser manuellement la lentille ophtalmique 100 sur le support 20 (dans le plan d'appui P1), sans à-coups.

Ici, et de manière préférentielle, le blocage de la lentille ophtalmique 100 est prévu pour être opéré manuellement. En d'autres termes, le support 20 n'est pas automatisé.

Il est alors prévu un élément élastique 25 qui est adapté à rappeler automatiquement le support 20 en position de centrage. La raideur de cet élément élastique 25 est toutefois prévue de telle sorte qu'il est possible pour l'opticien de repousser manuellement le support 20 en position de blocage ou en position de chargement.

En pratique, l'extrémité inférieure du tube cylindrique 21 est engagée à l'intérieur du conduit 17, ce qui permet de le guider lors de sa translation entre ses différentes positions de blocage, de chargement et de centrage. L'extrémité inférieure du tube cylindrique 21 est par ailleurs engagée en force sur un manchon 18 qui coulisse le long de l'arbre vertical 31, ce qui permet d'améliorer la précision du guidage en translation du support 20 suivant l'axe de déplacement A1.

L'élément élastique 25 est alors formé par un ressort de compression qui s'interpose entre, d'un côté, le fond 13 du dôme 11, et, de l'autre, la face inférieure de ce manchon 18.

On pourra éventuellement prévoir des moyens de butée du support 20 en position de centrage, pour empêcher le tube cylindrique 21 d'être extrait du conduit 17.

On pourra également éventuellement prévoir des moyens de verrouillage permettant de bloquer provisoirement le support 20 en position de chargement, pour faciliter le chargement de l'accessoire de blocage 200 dans la douille 16.

Les moyens de centrage 40 sont quant à eux conçus pour déterminer la position du référentiel optique de la lentille ophtalmique 100.

Comme le montre la figure 2, ces moyens de centrage 40 comportent au moins des premiers moyens d'éclairage 50 de la lentille ophtalmique 100 et des moyens de visualisation 60 de la lentille ophtalmique 100 éclairée par les premiers moyens d'éclairage 50. Ils comportent ici en outre des seconds moyens d'éclairage 53.

Pour le centrage de la lentille ophtalmique, on utilisera uniquement les premiers moyens d'éclairage 50, qui sont situés à l'opposé des moyens de visualisation 60 par rapport à la lentille ophtalmique 100.

Comme cela sera décrit plus en détail dans la suite de cet exposé, lorsqu'on souhaite acquérir le contour de la lentille ophtalmique 100 posée sur le support 20, on pourra utiliser les seconds moyens d'éclairage 53 (qui sont situés du même côté que les moyens de visualisation 60 par rapport à la lentille ophtalmique 100), en combinaison avec un accessoire rétrodiffuseur rétractable.

Les premiers moyens d'éclairage 50 sont répartis tout autour du support 20, de manière à générer une lumière rasante sur la tranche de la lentille ophtalmique 100 et sur la face optique de la lentille qui est posée sur le support 20 (ici sur la face avant 101 convexe).

Ces premiers moyens d'éclairage 50 comportent en l'espèce une pluralité de diodes électroluminescentes 51, 52 régulièrement réparties autour du support 20.

Parmi ces diodes électroluminescentes 51, 52, il en est prévu qui éclairent dans le domaine du visible et d'autres qui éclairent dans le domaine infrarouge.

Ces diodes électroluminescentes 51, 52 sont ici situées en saillie de la face interne de la paroi latérale du dôme 11, sous un rebord formé par le dôme 11 autour de la large ouverture circulaire 12. De cette manière, les diodes électroluminescentes 51, 52 ne sont pas directement visibles par les moyens de visualisation 60, ce qui évite tout éblouissement de ces moyens de visualisation 60.

Comme le montrent les figures 1 et 2, le châssis 10 comportent un bras 19 qui s'étend au dessus du dôme 11, qui est fixe par rapport à ce dernier et qui loge les moyens de visualisation 60.

Ces moyens de visualisation 60 comprennent un miroir 63 qui est incliné à 45 degrés par rapport à l'axe de déplacement A1 et qui permet de renvoyer l'image de la lentille ophtalmique 100 vers l'objectif 61 d'une caméra numérique 62. Ce miroir 63 permet de rendre l'appareil centreur-bloqueur 1 plus compact.

Le chemin optique parcouru par les rayons depuis la lentille jusqu'à l'objectif de la caméra numérique 62 est compris entre 15 et 40 centimètres (il est ici égal à 28 centimètres).

La caméra numérique 62 est alors conçue pour acquérir une image de la lentille ophtalmique 100 et pour la transmettre vers un écran de visualisation 70 orienté vers le visage de l'opticien.

Ainsi l'opticien peut-il observer en temps réel sur cet écran de visualisation 70 l'image de la lentille ophtalmique 100, sur laquelle apparaissent clairement les marquages à l'encre prévus sur la lentille. Apparaissent également sur cet écran de visualisation 70 une mire, c'est-à-dire des repères fixes qui indiquent la position et l'orientation de l'accessoire de blocage 200. L'opération de centrage consistera alors pour l'opticien à déplacer la lentille ophtalmique 100 de manière à superposer les marquages de la lentille avec la mire.

La caméra numérique 62 est prévue pour acquérir des images dans le domaine infrarouge, ce qui permet à l'opticien d'observer plus clairement la lentille ophtalmique 100, notamment lorsque celle-ci est teintée. En effet, le taux de transmission des lentilles teintées est généralement plus élevé dans le domaine infrarouge que dans le domaine visible.

Pour réduire au mieux les diffusions parasites dues aux moyens d'éclairage 51, 52 installés sur le faux-fond 14 et pour faire ressortir les marquages de la lentille, le faux-fond 13 du dôme 11 est revêtu, sur sa face supérieure, d'un revêtement sombre qui réfléchit moins de 80% de la lumière qu'il reçoit. Il s'agit ici d'une couche de peinture noire.

Le bras 19 du châssis 10 loge également, entre le miroir 63 et la caméra numérique 62, un miroir semi-réfléchissant 64 incliné à angle droit par rapport au miroir 63.

Il loge également les seconds moyens d'éclairage 53, qui sont ici formés par une diode électroluminescente qui émet de la lumière vers la lentille ophtalmique 100 via le miroir semi-réfléchissant 64 et le miroir 63.

Contrairement aux diodes électroluminescentes 51, 52 qui éclairent la lentille ophtalmique 100 par le dessous, ces seconds moyens d'éclairage 53 éclairent la lentille ophtalmique 100 par le dessus.

Comme cela a été précisé supra, il est en outre prévu un accessoire rétrodiffuseur rétractable, adapté à être placé par l'opticien entre le support 20 et la lentille ophtalmique 100.

Cet accessoire (non représenté sur les figures) se présente ici sous la forme d'une plaque munie d'un rétrodiffuseur à placer sous la lentille ophtalmique 100 ou d'un gabarit représentant la forme de la lentille ophtalmique 100, pour permettre à la caméra numérique 62 de distinguer clairement la forme du contour de cette lentille. Cet accessoire est plus spécifiquement utilisé dans le cas où l'on souhaite détecter une forme.

Pour centrer puis bloquer la lentille ophtalmique 100, l'appareil centreur-bloqueur 1 est utilisé par l'opticien de la manière suivante.

Au cours d'une première étape, l'opticien charge un accessoire de blocage 200 dans la douille 16, en prenant soin que ses reliefs viennent bien s'engager dans les reliefs correspondant de la douille 16, ce qui assure une bonne orientation de cet accessoire de blocage 200.

Au cours d'une seconde étape, l'opticien dépose la lentille ophtalmique 100 sur le support 20, de telle manière que la face avant 101 convexe de la lentille prenne appui contre le revêtement 22 de ce support 20.

Au cours d'une troisième étape, il déplace la lentille ophtalmique transversalement, c'est-à-dire en la faisant glisser sur le support 20, de telle sorte que la lentille ophtalmique 100 vienne se placer dans l'axe de l'accessoire de blocage 200, avec une orientation souhaitée. Pour cela, l'opticien observe l'image de la lentille ophtalmique 100 sur l'écran de visualisation 70, qui s'affiche en superposition avec la mire. L'opticien cherche alors à cette étape à superposer les marquages de la lentille ophtalmique 100 avec la mire.

Une fois cette position atteinte, l'opticien presse la lentille ophtalmique 100 vers le bas, en prenant soin de ne pas la déplacer transversalement, de manière à abaisser le support 20 en écrasant le ressort de compression 25. Cette opération permet à la lentille de venir en appui contre l'autocollant double-face prévu sur l'accessoire de blocage 200. De cette manière, ce dernier se colle automatiquement à la lentille, dans une position souhaitée (avec une précision inférieure au demi-millimètre) et avec une orientation souhaitée (avec une précision inférieure au degré).

La présente invention n'est nullement limitée au mode de réalisation décrit et représenté, mais l'homme du métier saura y apporter toute variante conforme à son esprit.

En particulier, on pourra prévoir que les moyens de visualisation (60) comportent un simple oeilleton de visée au travers duquel l'opticien pourra observer la lentille en superposition avec une mire gravée dans l'œilleton.

Encore en variante, on pourra prévoir d'automatiser l'opération de blocage, en équipant le support d'un mécanisme de manœuvre mécanique ou pneumatique, et en équipant l'appareil centreur-bloqueur de moyens de pilotage électronique de ce mécanisme de manœuvre.

En pratique, on pourrait ainsi prévoir de fixer au support une crémaillère et de fixer au châssis un moteur électrique engrenant cette crémaillère pour faire monter ou descendre le support.

Plus simplement, on pourrait prévoir dans le dôme une pompe à vide permettant d'aspirer l'air présent dans le tube cylindrique, ce qui permettrait de faire descendre le support en position de blocage ou de chargement.

Selon une autre variante de l'invention, on pourrait prévoir que le support présente une forme différente de celle représentée sur les figures. Il pourrait ainsi se présenter sous la forme d'un trépied monté mobile en translation sur le châssis.

Selon une autre variante de l'invention non représentée sur les figures, on aurait pu prévoir de monter le tube cylindrique (21) fixement sur le châssis, et de monter l'arbre vertical (31) mobile sur le châssis, par exemple suivant un mouvement de translation vertical.

Dans cette variante, il faudra prévoir des moyens d'actionnement de l'arbre vertical, pour lui permettre de monter vers la lentille en position de blocage, ou de redescendre en position de centrage. Il pourra s'agir de moyens électromécaniques (du type moteur à pignon et crémaillère), ou de moyens exclusivement mécaniques (avec par exemple un ressort de rappel de l'arbre vers le haut, des moyens de blocage de l'arbre en position basse, et des moyens de déverrouillage de ces moyens de blocage, accessibles à l'opticien).

## Revendications

1. Appareil centreur-bloqueur (1) comportant :
- un châssis (10),
- un support (20) monté sur le châssis (10), qui est adapté à recevoir une lentille ophtalmique (100),
- un accessoire de blocage (200) agencé pour se fixer à la lentille ophtalmique (100),
- des moyens de blocage (30) montés sur le châssis (10), qui sont adaptés à recevoir l'accessoire de blocage (200), et
- des moyens de centrage (40) montés sur le châssis (10), qui comportent un objectif de visée (61) de la lentille ophtalmique (100) et qui permettent de visualiser un référentiel de la lentille ophtalmique (100),
**caractérisé en ce que** les moyens de blocage (30) et le support (20) sont montés mobiles l'un par rapport à l'autre, entre une position de centrage dans laquelle la lentille ophtalmique (100) reçue par le support (20) est située à distance de l'accessoire de blocage (200) et dans laquelle les moyens de centrage (40) peuvent repérer le référentiel de la lentille ophtalmique (100), et une position de blocage dans laquelle la lentille ophtalmique (100) reçue par le support (20) vient s'appuyer contre l'accessoire de blocage (200) reçu par les moyens de blocage (30), et
**en ce que** les moyens de blocage (30) sont situés de telle sorte que l'accessoire de blocage (200) reste dans le champ image dudit objectif de visée (61) quelle que soit la position relative des moyens de blocage (30) par rapport au support (20).

2. Appareil centreur-bloqueur (1) selon la revendication précédente, dans lequel les moyens de blocage (30) sont montés fixes sur le châssis (10), et le support (20) est monté mobile sur le châssis (10),

3. Appareil centreur-bloqueur (1) selon la revendication précédente, dans lequel ledit support (20) est monté mobile en translation sur le châssis (10), suivant un axe de déplacement (A1).

4. Appareil centreur-bloqueur (1) selon la revendication précédente, dans lequel ledit support (20) délimitant un plan d'appui (P1) pour la lentille ophtalmique (100), les moyens de centrage (40) permettant d'observer la lentille ophtalmique (100) portée par le support (20) selon un axe de visualisation (A2) qui est transversal audit plan d'appui (P1) et qui est parallèle audit axe de déplacement (A1).

5. Appareil centreur-bloqueur (1) selon l'une des revendications 2 à 4, dans lequel il est prévu un élément élastique (25) qui est adapté à rappeler automatiquement le support (20) en position de centrage, et dont la raideur est telle qu'il est possible de repousser manuellement le support (20) jusqu'à sa position de blocage.

6. Appareil centreur-bloqueur selon l'une des revendications 2 à 4, dans lequel il est prévu des moyens de pilotage électronique d'un mécanisme de manœuvre du support, qui sont adaptés à commander automatiquement le déplacement du support entre sa position de centrage et sa position de blocage.

7. Appareil centreur-bloqueur (1) selon l'une des revendications 2 à 6, dans lequel le support (20) est mobile sur le châssis (10) jusqu'à une position de chargement, qui est située à l'opposé de la position de centrage par rapport à la position de blocage.

8. Appareil centreur-bloqueur (1) selon l'une des revendications précédentes, dans lequel, ledit support (20) délimitant un plan d'appui (P1) pour la lentille ophtalmique (100), ledit support (20) et lesdits moyens de blocage (30) sont situés d'un même côté du plan d'appui (P1).

9. Appareil centreur-bloqueur (1) selon l'une des revendications précédentes, dans lequel une majeure partie du support (20) est réalisée dans une matière transparente.

10. Appareil centreur-bloqueur (1) selon l'une des revendications précédentes, dans lequel le support (20) comporte une zone d'appui (22) pour la lentille ophtalmique (100), qui est réalisée dans un matériau antidérapant et anti-rayure permettant de maintenir fixement la lentille ophtalmique (100) sur le support (20) lorsque le support (20) se déplace depuis sa position de centrage jusqu'à sa position de blocage.

11. Appareil centreur-bloqueur (1) selon l'une des revendications précédentes, dans lequel, le support (20) délimitant un plan d'appui (P1) pour la lentille ophtalmique (100), l'objectif de visée (61) qui est situé d'un premier côté du plan d'appui (P1), et des premiers moyens d'éclairage (50) qui sont situés de l'autre côté du plan d'appui (P1).

12. Appareil centreur-bloqueur (1) selon la revendication précédente, dans lequel les premiers moyens d'éclairage (50) comportent au moins une source de lumière (51) dans le domaine visible.

13. Appareil centreur-bloqueur (1) selon l'une des deux revendications précédentes, dans lequel les premiers moyens d'éclairage (50) comportent au moins une source de lumière (52) dans le domaine infrarouge.

14. Appareil centreur-bloqueur (1) selon l'une des revendications précédentes, dans lequel, le support (20) délimitant un plan d'appui (P1) pour la lentille ophtalmique (100), les moyens de centrage (40) comportent, d'un même côté du plan d'appui (P1), ledit objectif de visée (61) et des seconds moyens d'éclairage (85) de la lentille ophtalmique (100).

15. Appareil centreur-bloqueur (1) selon la revendication précédente, dans lequel il est prévu un accessoire rétrodiffuseur rétractable, adapté à être placé entre le support (20) et la lentille ophtalmique (100).

## Patentansprüche

1. Zentrier- und Aufblockgerät (1) umfassend:
- ein Gestell (10),
- einen am Gestell (10) montierten Träger (20), der geeignet ist, ein Brillenglas (100) aufzunehmen,
- ein Aufblockzubehörteil (200), das dazu eingerichtet ist, sich am Brillenglas (100) zu fixieren,
- am Gestell (10) montierte Aufblockeinrichtungen (30), die dazu geeignet sind, das Aufblockzubehörteil (200) aufzunehmen, und
- am Gestell (10) montierte Zentriereinrichtungen (40), die ein Objektiv (61) für das Brillenglas (100) umfassen und die es ermöglichen, ein Bezugssystem des Brillenglases (100) zu visualisieren,
**dadurch gekennzeichnet, dass** die Aufblockeinrichtungen (30) und der Träger (20) zueinander beweglich montiert sind zwischen einer Zentrierposition, in der das vom Träger (20) aufgenommene Brillenglas (100) vom Aufblockzubehörteil (200) beabstandet ist und in der die Zentriereinrichtungen (40) das Bezugssystem des Brillenglases (100) erfassen können, und einer Aufblockposition, in der das vom Träger (20) aufgenommene Brillenglas (100) an dem von den Aufblockeinrichtungen (30) aufgenommenen Aufblockzubehörteil (200) anliegt, und
dass die Aufblockeinrichtungen (30) derart angeordnet sind, dass das Aufblockzubehörteil (200) unabhängig von der relativen Position der Aufblockeinrichtungen (30) in Bezug auf den Träger (20) im Bildfeld des Objektivs (61) bleibt.

2. Zentrier- und Aufblockgerät (1) nach dem vorhergehenden Anspruch, bei dem die Aufblockeinrichtungen (30) fest am Gestell (10) montiert sind und der Träger (20) beweglich am Gestell (10) montiert ist.

3. Zentrier- und Aufblockgerät (1) nach dem vorhergehenden Anspruch, bei dem der Träger (20) am Gestell (10) entlang einer Verlagerungsachse (A1) translatorisch beweglich montiert ist.

4. Zentrier- und Aufblockgerät (1) nach dem vorhergehenden Anspruch, bei dem der Träger (20) eine Auflageebene (P1) für das Brillenglas (100) begrenzt, wobei die Zentriereinrichtungen (40) es ermöglichen, das vom Träger (20) getragene Brillenglas (100) gemäß einer Visualisierungsachse (A2) zu betrachten, die quer zur Auflageebene (P1) verläuft und die parallel zur Verlagerungsachse (A1) ist.

5. Zentrier- und Aufblockgerät (1) nach einem der Ansprüche 2 bis 4, bei dem ein federndes Element (25) vorgesehen ist, das geeignet ist, den Träger (20) automatisch in die Zentrierposition zurückzustellen, und dessen Steifigkeit derart ist, dass es möglich ist, den Träger (20) manuell bis in seine Aufblockposition zurückzuschieben.

6. Zentrier- und Aufblockgerät nach einem der Ansprüche 2 bis 4, bei dem Einrichtungen zur elektronischen Ansteuerung eines Betätigungsmechanismus des Trägers vorgesehen sind, die geeignet sind, die Verlagerung des Trägers zwischen seiner Zentrierposition und seiner Aufblockposition automatisch zu steuern.

7. Zentrier- und Aufblockgerät (1) nach einem der Ansprüche 2 bis 6, bei dem der Träger (20) am Gestell (10) bis zu einer Aufgabeposition beweglich ist, die in Bezug auf die Aufblockposition entgegengesetzt zur Zentrierposition ist.

8. Zentrier- und Aufblockgerät (1) nach einem der vorhergehenden Ansprüche, bei dem, wenn der Träger (20) eine Auflageebene (P1) für das Brillenglas (100) begrenzt, der Träger (20) und die Aufblockeinrichtungen (30) auf der gleichen Seite der Auflageebene (P1) gelegen sind.

9. Zentrier- und Aufblockgerät (1) nach einem der vorhergehenden Ansprüche, bei dem ein großer Teil des Trägers (20) aus einem transparenten Material ausgeführt ist.

10. Zentrier- und Aufblockgerät (1) nach einem der vorhergehenden Ansprüche, bei dem der Träger (20) einen Auflagebereich (22) für das Brillenglas (100) umfasst, der aus einem rutsch- und kratzfesten Material ausgeführt ist, das es ermöglicht, das Brillenglas (100) auf dem Träger (20) zu fixieren, wenn sich der Träger (20) aus seiner Zentrierposition bis in seine Aufblockposition verlagert.

11. Zentrier- und Aufblockgerät (1) nach einem der vorhergehenden Ansprüche, bei dem, wenn der Träger (20) eine Auflageebene (P1) für das Brillenglas (100) begrenzt, das Objektiv (61), das auf einer Seite der Auflageebene (P1) gelegen ist, und erste Beleuchtungsmittel (50), die auf einer anderen Seite der Auflageebene (P1) gelegen sind.

12. Zentrier- und Aufblockgerät (1) nach dem vorhergehenden Anspruch, bei dem die ersten Beleuchtungsmittel (50) mindestens eine Lichtquelle (51) im sichtbaren Bereich umfassen.

13. Zentrier- und Aufblockgerät (1) nach einem der beiden vorhergehenden Ansprüche, bei dem die ersten Beleuchtungsmittel (50) mindestens eine Lichtquelle (52) im infraroten Bereich umfassen.

14. Zentrier- und Aufblockgerät (1) nach einem der vorhergehenden Ansprüche, bei dem, wenn der Träger (20) eine Auflageebene (P1) für das Brillenglas (100) begrenzt, die Zentriereinrichtungen (40) auf der gleichen Seite der Auflageebene (P1) das Objektiv (61) und zweite Beleuchtungseinrichtungen (85) für das Brillenglas (100) umfassen.

15. Zentrier- und Aufblockgerät (1) nach dem vorhergehenden Anspruch, bei dem ein einziehbares rückstreuendes Zubehörteil vorgesehen ist, das geeignet ist, zwischen dem Träger (20) und dem Brillenglas (100) angeordnet zu werden.

## Claims

1. A centering-blocking apparatus (1) including:
- a chassis (10),
- a holder (20) mounted on the chassis (10), which is suitable for receiving an ophthalmic lens (100),
- a blocking accessory (200) arranged to attach to the ophthalmic lens (100),
- blocking means (30) mounted on the chassis (10), which are suitable for receiving the blocking accessory (200), and
- centering means (40) mounted on the chassis (10), which include an objective (61) for sighting the ophthalmic lens (100) and which allow a frame of reference of the ophthalmic lens (100) to be viewed,
**characterized in that** the blocking means (30) and the holder (20) are mounted so as to be able to move one with respect to the other, between a centering position in which the ophthalmic lens (100) received by the holder (20) is located at a distance away from the blocking accessory (200) and in which the centering means (40) are able to detect the frame of reference of the ophthalmic lens (100), and a blocking position in which the ophthalmic lens (100) received by the holder (20) bears against the blocking accessory (200) received by the blocking means (30), and
**in that** the blocking means (30) are located such that the blocking accessory (200) remains in the image field of said sighting objective (61) whatever the relative position of the blocking means (30) with respect to the holder (20).

2. The centering-blocking apparatus (1) as claimed in the preceding claim, wherein the blocking means (30) are fixedly mounted on the chassis (10), and the holder (20) is movably mounted on the chassis (10).

3. The centering-blocking apparatus (1) as claimed in the preceding claim, wherein said holder (20) is mounted on the frame (10) so as to be translationally movable along a movement axis (A1).

4. The centering-blocking apparatus (1) as claimed in the preceding claim, wherein said holder (20) defining a bearing plane (P1) for the ophthalmic lens (100), the centering means (40) allow the ophthalmic lens (100) borne by the holder (20) to be observed along a viewing axis (A2) that is transverse to said bearing plane (P1) and that is parallel to said movement axis (A1).

5. The centering-blocking apparatus (1) as claimed in one of claims 2 to 4, wherein an elastic element (25) that is suitable for automatically returning the holder (20) to the centering position, and the stiffness of which is such that it is possible to manually push the holder (20) into its blocking position, is provided.

6. The centering-blocking apparatus as claimed in one of claims 2 to 4, wherein electronic means for controlling a mechanism for maneuvering the holder, which means are suitable for automatically controlling the movement of the holder between its centering position and its blocking position, are provided.

7. The centering-blocking apparatus (1) as claimed in one of claims 2 to 6, wherein the holder (20) is movable on the chassis (10) into a loading position, which is located opposite the centering position with respect to the blocking position.

8. The centering-blocking apparatus (1) as claimed in one of the preceding claims, wherein, said holder (20) defining a bearing plane (P1) for the ophthalmic lens (100), said holder (20) and said blocking means (30) are located on the same side of the bearing plane (P1).

9. The centering-blocking apparatus (1) as claimed in one of the preceding claims, wherein most of the holder (20) is produced from a transparent material.

10. The centering-blocking apparatus (1) as claimed in one of the preceding claims, wherein the holder (20) includes a bearing zone (22) for the ophthalmic lens (100), which is produced from an anti-slip and anti-scratch material allowing the ophthalmic lens (100) to be fixedly maintained on the holder (20) when the holder (20) moves from its centering position to its blocking position.

11. The centering-blocking apparatus (1) as claimed in one of the preceding claims, wherein, the holder (20) defining a bearing plane (P1) for the ophthalmic lens (100), the sighting objective (61), which is located on a first side of the bearing plane (P1), and first illuminating means (50), which are located on the other side of the bearing plane (P1).

12. The centering-blocking apparatus (1) as claimed in the preceding claim, wherein the first illuminating means (50) include at least one source of light (51) in the visible domain.

13. The centering-blocking apparatus (1) as claimed in one of the two preceding claims, wherein the first illuminating means (50) include at least one source of light (52) in the infrared domain.

14. The centering-blocking apparatus (1) as claimed in one of the preceding claims, wherein, the holder (20) defining a bearing plane (P1) for the ophthalmic lens (100), the centering means (40) include, on one and the same side of the bearing plane (P1), said sighting objective (61) and second means (85) for illuminating the ophthalmic lens (100).

15. The centering-blocking apparatus (1) as claimed in the preceding claim, wherein a retractable backscattering accessory suitable for being placed between the holder (20) and the ophthalmic lens (100) is provided.
